# EUROPEAN PATENT APPLICATION

(11) **EP 1 465 231 A2**
(43) Date of publication of application: **06.10.2004**
(21) Application number: 04251440.6
(22) Date of filing: 12.03.2004
(51) Int. Cl.: H01J 49/16

(54) **Methods and devices for performing matrix assisted laser desorption/ionization protocols**

(30) Priority: 20.03.2003 US 393532
(71) Applicant: Agilent Technologies Inc, Palo Alto, CA 94306-2024 (US)
(72) Inventor: Lopez-Avilla, Viorica, Cupertino, California 95014 (US); Schleifer, Arthur, Portola Valley, California 94028 (US); Ostrowski, Magdalena Anna, Santa Clara, California 95050 (US)
(74) Representative: Tollett, Ian

(57) **Abstract**

Methods and devices for performing matrix assisted laser desorption/ionization protocols are provided. In accordance with the subject methods, an analyte is first deposited into a fluid retaining structure (30) present on a substrate (31) surface. The fluid retaining structure (30) includes a material that changes from a first fluid state to a second solid state in response to an applied stimulus. The resultant retained analyte is then digested with an analyte-digesting reagent to produce fragments of the analyte. The resultant fragments are then ionized for subsequent mass spectrometry analysis. Also provided are devices, e.g., sample holders (33), suitable for use in the subject methods. Kits for use in the subject methods are also provided.

## Description

The present invention relates to methods and apparatus for ionizing fragments of an analyte for subsequent analysis for mass spectroscopy, particularly matrix-assisted laser desorption/isonization ("MALDI") methods.

Matrix-assisted laser desorption/ionization ("MALDI") is a process of ionizing analytes in a sample in a manner that allows the ionized analytes to be further studied. During the past decade, MALDI has proven to be a valuable tool in the analysis of a variety of different molecules, e.g., biomolecules or biosubstances, and especially large molecules and has application in a wide variety of fields such as genomics, proteomics and the like. Accordingly, a number of MALDI devices have been developed for performing MALDI on an analyte of interest, where in certain instances these MALDI devices are coupled to or otherwise integrated with a device for studying the MALDI ionized analyte, e.g., mass spectrometers. Mass spectrometers are instruments that measure and analyze ions by their mass and charge. For the most part, time-of-flight mass spectrometers ("TOF-MS") are used for this purpose, but other mass spectrometers may be used as well, such as ion cyclotron resonance spectrometers (Fourier transform ion cyclotron mass resonance) and high-frequency quadrupole ion trap mass spectrometers.

Generally, MALDI is a method that enables vaporization and ionization of non-volatile biological analytes from a solid phase directly into a gaseous phase. To accomplish this task, the analyte of interest is suspended or dissolved in a matrix that generally is a small organic compound which co-crystallizes with the analyte. A sample containing the analyte/matrix mixture is then applied to a suitable support, e.g., a sample probe or sample plate, which is then loaded into a device for performing MALDI. It is theorized that the presence of the matrix enables the analyte to be ionized without being degraded, a problem of other analogous methods. Accordingly, MALDI enables the detection of intact molecules as large as 1 million Daltons.

A laser beam serves as the desorption and ionization source in MALDI and, as such, once the substrate supported sample is properly loaded into the MALDI device, a laser is used to vaporize the analyte. In the vaporization process, the matrix absorbs some of the laser light energy causing part of the illuminated matrix to vaporize. The resultant vapor cloud of matrix carries some of the analyte with it so that the analyte may be analyzed. As such, the matrix molecules absorb most of the incident laser energy, thus minimizing analyte damage and ion fragmentation.

Once the molecules of the analyte are vaporized and ionized, they may be analyzed. As mentioned above, this may be accomplished by the use of a mass spectrometer. Accordingly, the vaporized ions are transferred electrostatically into a mass analyzer where they are separated from the matrix ions, for example a TOF-MS flight tube. Following separation of the ions, the ions are then directed to a detector so that the ions may be individually detected. Depending on the nature of the analyzer and how it separates the ions, mass spectrometers fall into different categories. In the case of a TOF-MS for example, separation and detection is based on the mass-to-charge (m/z) ratios of the ions. As such, detection of the ions at the end of the time-of-flight tube is based on their flight time, which is proportional to the square root of their *m*/*z*.

However, before an analyte can be subjected to a MALDI protocol, it must be properly prepared for the MALDI protocol. This preparation may include isolating a particular analyte from within a sample such as from within serum, blood, tissue homogenate, cell lysate or other biological media, and then separating the analyte from other sample components. For example, in the case of proteins, such is typically accomplished by polyacrylamide gel electrophoresis, e.g., SDS-PAGE. However, these electrophoretic protocols to prepare a protein sample for use in a MALDI protocol are typically labor intensive and time consuming.

For example, in order to use conventional protein characterization protocols utilizing mass spectrometry, proteins may, as described above, be isolated by polyacrylamide gel electrophoresis. In these electrophoretic protocols, once the proteins are run on the gel, the individual spots, or bands of proteins are then cut from the electrophoretic gels and transferred to containers such as a vials, microcentrifuge tubes, test tubes, microtiter plates, etc. The proteins are then further processed in the containers, e.g., rinsed, reduced, S-alkylated. Still further, the processing of these proteins usually includes digesting or cleaving the proteins by the addition of a proteolytic digesting agent to the container in which the protein is retained. Following this digestion, the digested mixture must then be transferred to a substrate, such as a MALDI sample plate or probe, that is capable of being used in a MALDI protocol. This transfer step is typically accomplished manually by pipette. As is apparent, the above described sample preparation is laborious, time- consuming and requires numerous pipetting steps, which only adds to the time consuming and laborious protocol, and may introduce errors into a protocol.

Furthermore, in addition to sample preparation for a MALDI protocol, a suitable MALDI sample plate must be chosen, upon which a prepared sample is retained for use in a MALDI protocol. For example, when designing effective MALDI methods, attention must be given to the support upon which a sample of the matrix/analyte mixture is applied so that it can be inserted into an appropriate MALDI device. These supports may range from single sample supports to multi-sample supports similar to conventional microtiter plates.

Regardless of the number of samples accommodated by a MALDI support, the procedure for applying a sample to the support is generally the same. In depositing a sample for analysis onto a sample support, the sample must be deposited at a specific position on the supports where in many embodiments it is dried. This specific position corresponds to the position of the laser beam and also provides a unique address for the sample such that identification of a particular sample, amongst multiple samples analyzed, is possible.

It will be apparent that for MALDI protocols it is important to be able to position the sample at a particular area of the support with a high degree of precision and accuracy so that the sample is not only positioned in the correct position, but also so that there is no cross-contamination between samples if more than one sample is present on a substrate, i.e., the sample is retained at the particular position. Without visual aids, it is difficult, particularly for manually deposited samples, to precisely and accurately position the small volumes of sample required, even with the use of a pipette. Furthermore, even if a sample is precisely positioned on a support, the sample may spread or wick out of the area and could contaminate other samples, if present, or deplete the amount of sample in the intended area that is to be interrogated by the MALDI laser to a level that may be below the minimum volume requirements for MALDI.

Prior attempts directed to addressing one or both of the above-described problems related to sample preparation and MALDI sample plates have thus far provided incomplete solutions. For example, in one such attempt designed to simplify the gel electrophoresis sample preparation protocol described above, an "on-probe" protein digestion protocol has been developed. This "on-probe" protein digestion protocol utilizes a direct transfer of an excised protein from an SDS-PAGE gel to a MALDI probe where "on-probe" digestion of the protein samples takes place (see Stensballe et al., *Simplified sample preparation method for protein identification by matrix-assisted laser desorption*/*ionization mass spectroscopy: In-gel digestion on the probe surface*; Proteomics 1, 955-966 (2001)). However, this protocol does not eliminate the labor intensive and time consuming use of protein separation by gel electrophoresis and is limited to proteins, and more particularly proteins first separated by gel electrophoresis.

Prior solutions directed towards developing suitable MALDI sample plates have also met with limited success. For example, attempts to provide discrete positions at which to deposit a sample for MALDI have been developed, but have thus far not provided complete solutions. For example, MALDI supports having surfaces with scribed patterns (laser etched, chemically etched, and the like) have been developed. However, while laser scribed surfaces may provide visual clues to a particular location of a support, these laser scribed patterns usually do not effectively contain the sample in the location and thus the sample may still spread about the support surface and in fact may even facilitate wicking the sample out of the designated support location. The problems associated with laser scribed surfaces are only exacerbated by the use of large sample volumes.

Patterning the support surface, e.g., with a hydrophobic/hydrophilic treatment or the like, has also been attempted. These patterns, such as hydrophobic/hydrophilic patterns, are surface treatments that are typically a film or a chemically modified monolayer on the support surface. While these patterns may contain a sample to a specific area of the support once the sample is deposited thereto, they are difficult, if not impossible, to see with the naked human eye, and thus usually do not provide a visual reference to aid in depositing a sample at a particular support location. Furthermore, these patterned areas usually have a sample volume limit such that once this limit is exceeded, the sample spreads out of the designated area thus depleting the sample volume for analysis and/or contaminating other samples, if present.

As such, there continues to be an interest in the development of methods and devices for performing a MALDI protocol and specifically for methods and devices for MALDI sample preparation and sample retention on a MALDI substrate surface. Of particular interest are methods and devices that are easy to use, have minimal steps including minimal pipetting steps, are not labor intensive and which are effective and efficient at preparing and holding a sample for use in a MALDI protocol. It would be advantageous if such methods and devices could be used to process and hold a single sample, as well as multiple samples simultaneously without cross-contamination, for use in a MALDI protocol.

### Relevant Literature

References of interest include: International Publication Nos.: WO 96/37777, WO 98/59360, AU 729,513, GB 2,312782 A; GB 2,332,273 A; GB 2,370114A; and EP 0964427 A2, as well as in U.S. Patent Publication Nos. 2002031773; 20010019829, 20010021535 and U.S. Patent Nos.: 5,498,545; 5,643,800; 5,777,324; 5,777,860; 5,828,063; 5,841,136; 6,004,770, 6,027,942; 6,093,541, 6,111,251; 6,287,872; 6,316,266, 6,414,306; and 6,423,966; the disclosures of which are herein incorporated by reference. Also of interest are: Stensballe et al., *Simplified sample preparation method for protein identification by matrix-assisted laser desorption*/*ionization mass spectroscopy: In-gel digestion on the probe surface*; Proteomics 1, 955-966 (2001); Ledman, et al., *Enabling Sample Plates for Voyager MALDI ToF Mass Spectrometers* (Applied Biosystems, Inc. publication); Liang et al., *On-Probe Immunoaffinity Extraction by Matrix-Assisted Laser Desporption*/*Ionization Mass Spectroscopy*, Anal. Chem. 70, 498-503 (1998); Kiernan et al., *High-Throughput Protein Characterization Using Mass Spectrometric Immunoassay, Analytical Biochemistry*, 301, 49-56 (2002); Wang et al., *A General Method for Producing Bioaffintiy MALDI Probes*, Anal. Chem, 71, 2014-2020 (1999); David Craft et al., *Microcolumn Capture and Digestion of Proteins Combined with Mass Spectrometry for Protein Identification*, Journal of Proteome Research, vol. 1, no. 6, 537-547 (2002); Michele A. Kelly, et al., *Strategic Use of Affinity-Based Mass Spectrometry Techniques in the Drug Discovery Process*, Analytical Chemistry, Vol. 74. No. 1 (2002) and Tasso Miliotis et al., *Ready-Made Matrix-Assisted Laser Desorption*/*Ionization Target Plates Coated With Thin Matrix Layer for Automated Sample Deposition in High-Density Array Format*, Rapid Commun. Mass Spectrom, 16: 117-126 (2002).

Methods and devices for performing matrix assisted laser desorption/ionization protocols are provided. In accordance with the subject methods, an analyte is first deposited into a fluid retaining structure present on a substrate surface. The fluid retaining structure includes a material that changes from a first fluid state to a second solid state in response to an applied stimulus. The resultant retained analyte is then digested with an analyte-digesting reagent to produce fragments of the analyte. The resultant fragments are then ionized for subsequent mass spectrometry analysis. Also provided are devices, e.g., sample holders, suitable for use in the subject methods. Kits for use in the subject methods are also provided.
A number of preferred embodiments of the present invention will now be described with reference to the accompanying drawings, in which:-

FIG. 1 shows an exemplary embodiment of a subject MALDI sample holder having a single fluid retaining structure.

FIG. 2 shows an exemplary embodiment of a subject MALDI sample holder having a plurality of fluid retaining structures arranged in the form of a grid.

FIG. 3 shows an exemplary embodiment of a subject MALDI sample holder having a plurality of fluid retaining structures arranged in the form of a circular pattern.

FIGS 4A-4C show an exemplary MALDI sample holder and an exemplary array that are configured to be joined together to provide fluid retaining chambers about the array features. Specifically, FIG. 4A shows an exemplary MALDI sample holder configured to be joined with the array of FIG. 4B and FIG. 4C shows the MALDI sample holder and the array operatively joined together.

FIG. 5 shows an exemplary MALDI sample holder that includes specific analyte binding components on a surface thereof.

FIG. 6 shows a mass spectrum of a commercially available myoglobin tryptic digest.

FIG. 7 shows a mass spectrum of a myoglobin on-plate tryptic digest according to the subject invention.

FIG. 8 shows a mass spectrum of myoglobin that has not been digested.

### DEFINITIONS

The term "nucleic acid" as used herein means a polymer composed of nucleotides, e.g., deoxyribonucleotides or ribonucleotides, or compounds produced synthetically (e.g., PNA as described in U.S. Patent No. 5,948,902 and the references cited therein) which can hybridize with naturally occurring nucleic acids in a sequence specific manner analogous to that of two naturally occurring nucleic acids, e.g., can participate in hybridization reactions, i.e., cooperative interactions through Pi electrons stacking and hydrogen bonds, such as Watson-Crick base pairing interactions, Wobble interactions, etc.

The terms "ribonucleic acid" and "RNA" as used herein mean a polymer composed of ribonucleotides.

The terms "deoxyribonucleic acid" and "DNA" as used herein mean a polymer composed of deoxyribonucleotides.

The term "oligonucleotide" as used herein denotes single stranded nucleotide multimers of from about 10 to about 100 nucleotides and up to about 200 nucleotides in length.

The term "polynucleotide" as used herein refers to single or double stranded polymer composed of nucleotide monomers of generally greater than about 100 nucleotides in length.

The term "monomer" as used herein refers to a chemical entity that can be covalently linked to one or more other such entities to form an oligomer. Examples of "monomers" include nucleotides, amino acids, saccharides, peptides, and the like.

The term "oligomer" is used herein to indicate a chemical entity that contains a plurality of monomers. As used herein, the terms "oligomer" and "polymer" are used interchangeably. Examples of oligomers and polymers include polydeoxyribonucleotides (DNA), polyribonucleotides (RNA), other polynucleotides which are C-glycosides of a purine or pyrimidine base, polypeptides (proteins), polysaccharides (starches, or polysugars), and other chemical entities that contain repeating units of like chemical structure.

The terms "nucleoside" and "nucleotide" are intended to include those moieties which contain not only the known purine and pyrimidine bases, but also other heterocyclic bases that have been modified. Such modifications include methylated purines or pyrimidines, acylated purines or pyrimidines, alkylated riboses or other heterocycles. In addition, the terms "nucleoside" and "nucleotide" include those moieties that contain not only conventional ribose and deoxyribose sugars, but other sugars as well. Modified nucleosides or nucleotides also include modifications on the sugar moiety, e.g., wherein one or more of the hydroxyl groups are replaced with halogen atoms or aliphatic groups, or are functionalized as ethers, amines, or the like.

"Optional" or "optionally" means that the subsequently described circumstance may or may not occur, so that the description includes instances where the circumstance occurs and instances where it does not. An "array," includes any two-dimensional, as well as a three-dimensional, arrangement of addressable regions bearing a particular chemical moiety or moieties (e.g., biopolymers such as polynucleotide or oligonucleotide sequences (nucleic acids), polypeptides (e.g., proteins), carbohydrates, lipids, etc.) associated with that region. In the broadest sense, the preferred arrays are arrays of polymeric binding agents, where the polymeric binding agents may be any of: polypeptides, proteins, nucleic acids, polysaccharides, synthetic mimetics of such biopolymeric binding agents, etc. In many embodiments of interest, the arrays are arrays of nucleic acids, including oligonucleotides, polynucleotides, cDNAs, mRNAs, synthetic mimetics thereof, and the like. Where the arrays are arrays of nucleic acids, the nucleic acids may be covalently attached to the arrays at any point along the nucleic acid chain, but are generally attached at one of their termini (e.g. the 3' or 5' terminus). Sometimes, the arrays are arrays of polypeptides, e.g., proteins or fragments thereof.

Any given substrate may carry one, two, four or more or more arrays disposed on a front surface of a substrate. Depending upon the use, any or all of the arrays may be the same or different from one another and each may contain multiple spots or features. A typical array may contain from about one to about ten or more, e.g., more than ten, more than one hundred, more than one thousand, more than ten thousand features, or even more than one hundred thousand features, in an area of less than 20 cm² or even less than 10 cm². For example, features may have widths (that is, diameter, for a round spot) in the range from a 10 µm to 1.0 cm. In other embodiments each feature may have a width in the range of 1.0 µm to 1.0 mm, usually 5.0 µm to 500 µm, and more usually 10 µm to 200 µm. Non-round features may have area ranges equivalent to that of circular features with the foregoing width (diameter) ranges. At least some, or all, of the features are of different compositions (for example, when any repeats of each feature composition are excluded the remaining features may account for at least 5%, 10%, or 20% of the total number of features). Interfeature areas will typically (but not essentially) be present which do not carry any polynucleotide (or other biopolymer or chemical moiety of a type of which the features are composed). Such interfeature areas typically will be present where the arrays are formed by processes involving drop deposition of reagents but may not be present when, for example, photolithographic array fabrication processes are used. It will be appreciated though, that the interfeature areas, when present, could be of various sizes and configurations.

Each array may cover an area of less than 100 cm², or even less than 50 cm², 10 cm² or 1 cm². In many embodiments, the substrate carrying the one or more arrays will be shaped generally as a rectangular solid (although other shapes are possible), having a length that may range from about 4 mm to about 1 m, usually more than about 4 mm to about 600 mm, more usually less than about 400 mm; a width that may range from about 4 mm to about 1 m, usually less than about 500 mm and more usually less than about 400 mm; and a thickness that may range from about 0.01 mm to about 5.0 mm, usually from about 0.1 mm to about 2 mm and more usually from about 0.2 to about 1.5 mm.

An array is "addressable" when it has multiple regions of different moieties (e.g., different polynucleotide sequences) such that a region (i.e., a "feature" or "spot" of the array) at a particular predetermined location (i.e., an "address") on the array will detect a particular target or class of targets (although a feature may incidentally detect non-targets of that feature). Array features are typically, but need not be, separated by intervening spaces. In the case of an array, the "target" will be referenced as a moiety in a mobile phase (typically fluid), to be detected by probes ("target probes") which are bound to the substrate at the various regions. However, either of the "target" or "target probe" may be the one which is to be evaluated by the other (thus, either one could be an unknown mixture of polynucleotides or proteins to be evaluated by binding with the other). A "scan region" refers to a contiguous (preferably, rectangular) area in which the array spots or features of interest, as defined above, are found. The scan region is that portion of the total area illuminated from which the resulting fluorescence is detected and recorded. An "array layout" refers to one or more characteristics of the features, such as feature positioning on the substrate, one or more feature dimensions, and an indication of a moiety at a given location. "Hybridizing" and "binding", with respect to polynucleotides and proteins, . are used interchangeably.

"Remote location," means a location other than the location at which the array is present and hybridization occurs. For example, a remote location could be another location (e.g., office, lab, etc.) in the same city, another location in a different city, another location in a different state, another location in a different country, etc. As such, when one item is indicated as being "remote" from another, what is meant is that the two items are at least in different rooms or different buildings, and may be at least one mile, ten miles, or at least one hundred miles apart.

Methods and devices for performing matrix assisted laser desorption/ionization protocols are provided. In accordance with the subject methods, an analyte is first deposited into a fluid retaining structure present on a substrate surface. The fluid retaining structure includes a material that changes from a first fluid state to a second solid state in response to an applied stimulus. The resultant retained analyte is then digested with an analyte-digesting reagent to produce fragments of the analyte. The resultant fragments are then ionized for subsequent mass spectrometry analysis. Also provided are devices, e.g., sample holders, suitable for use in the subject methods. Kits for use in the subject methods are also provided.

Before the present invention is described, it is to be understood that this invention is not limited to particular embodiments described, as such may, of course, vary. It is also to be understood that the terminology used herein is for the purpose of describing particular embodiments only, and is not intended to be limiting, since the scope of the present invention will be limited only by the appended claims.

Where a range of values is provided, it is understood that each intervening value, to the tenth of the unit of the lower limit unless the context clearly dictates otherwise, between the upper and lower limit of that range and any other stated or intervening value in that stated range is encompassed within the invention. The upper and lower limits of these smaller ranges may independently be included in the smaller ranges is also encompassed within the invention, subject to any specifically excluded limit in the stated range. Where the stated range includes one or both of the limits, ranges excluding either or both of those included limits are also included in the invention.

Unless defined otherwise, all technical and scientific terms used herein have the same meaning as commonly understood by one of ordinary skill in the art to which this invention belongs. Although any methods and materials similar or equivalent to those described herein can also be used in the practice or testing of the present invention, the preferred methods and materials are now described. All publications mentioned herein are incorporated herein by reference to disclose and describe the methods and/or materials in connection with which the publications are cited.

It must be noted that as used herein and in the appended claims, the singular forms "a", "an", and "the" include plural referents unless the context clearly dictates otherwise.

The publications discussed herein are provided solely for their disclosure prior to the filing date of the present application. Nothing herein is to be construed as an admission that the present invention is not entitled to antedate such publication by virtue of prior invention. Further, the dates of publication provided may be different from the actual publication dates which may need to be independently confirmed.

As will be apparent to those of skill in the art upon reading this disclosure, each of the individual embodiments described and illustrated herein has discrete components and features which may be readily separated from or combined with the features of any of the other several embodiments without departing from the scope or spirit of the present invention.

As summarized above, the subject invention provides methods and compositions for performing matrix-assisted laser desorption/ionization protocols. In further describing the subject invention, the subject methods will be described in greater detail, followed by a review of the systems and kits provided by the invention for practicing the subject methods.

### METHODS OF PERFORMING A MALDI PROTOCOL

In accordance with the subject invention, methods of performing matrix-assisted laser desorption/ionization protocols are provided. More specifically, the subject invention provides methods for depositing and retaining an analyte of a sample in a fixed position on a substrate surface and digesting the analyte into fragments for subsequent ionization and mass spectrometry analysis for use in a matrix-assisted laser desorption/ionization protocol.

Accordingly, the subject invention may be employed in a wide variety of MALDI protocols for use in a wide variety of applications and thus is not limited to any particular MALDI protocol or application described herein, where examples of MALDI protocols suitable for use with the subject invention include, but are not limited to, vacuum MALDI protocols and atmospheric pressure ("AP") MALDI protocols, where reflection and transmission geometry may be employed. Such MALDI protocols are the basis for many of the methods and devices used in a variety of different fields, e.g., genomics (e.g., in sequencing, SNP detection, nucleic acid amplification, differential gene expression analysis, identification of novel genes, gene mapping, finger printing, etc.), proteomics (e.g., differential protein expression, peptide mapping, protease fingerprinting, protein-ligand interactions, etc.), identification and characterization of organelles and microorganisms such as bacteria and viruses, etc. The subject methods generally include depositing an analyte of interest into at least one subject fluid retaining structure present on the surface of a substrate. In this manner, the analyte is effectively retained within the fluid retaining structure so that it does not spread about the substrate surface. The fluid retaining structures of the subject invention are capable of withstanding any sample processing protocols and/or MALDI protocols to which the sample may be subjected so that all such protocols may be conveniently performed within the fluid retaining structures. In certain embodiments, a plurality of samples may be deposited into a plurality of different fluid retaining structures, where one or more samples may be the same or one or more may be different. As noted above and which will be further described in greater detail below, a feature of the subject invention is that once retained by a fluid retaining structure, the analyte present in the sample is digested with a digesting reagent to produce analyte fragments confined or retained within the fluid retaining structure. A matrix-assisted laser desorption/ionization protocol may then be performed on these retained analyte fragments.

Accordingly, in certain embodiments, the substrate holding the digested fragments may be operatively coupled to, e.g., inserted into or otherwise associated with, a MALDI device, and MALDI may be performed on the fragmented analyte(s) retained in the fluid retaining structure(s) so that the analyte(s) may be characterized. The ability to process, e.g., digest, analyte directly on a MALDI protocol-compatible substrate provided by the subject invention minimizes sample handling in comparison with conventional protocols.

Thus, the subject methods include depositing and effectively retaining an analyte on a substrate surface, where such may be accomplished by the use of a substrate that includes at least one fluid retaining structure on a surface thereof. The substrates which include one or more fluid retaining structures employed, and which may be used in the subject methods, may generally be referred to as MALDI sample holders in that they are capable of effectively holding or retaining at least one sample for sample processing and for use in a matrix-assisted laser desorption/ionization protocol such that they are configured for use in a matrix-assisted laser desorption/ionization protocol.

More specifically, the MALDI sample holders of the subject invention include a substrate having at least one substrate surface, upon which is positioned at least one fluid retaining structure, where in certain embodiments a plurality of fluid retaining structures may be present on the substrate surface such that a plurality of samples may be retained therein without cross-contamination. In accordance with the subject invention, each subject fluid retaining structure is capable of holding and effectively retaining a fluid sample for sample processing, e.g., analyte digestion, and in many embodiments the sample may then be used in a MALDI protocol. Representative such MALDI sample holders are disclosed in EP Application No. 03257776.9 (attorney ref. N14449) filed on 10 December 2003, the disclosure of which is herein incorporated by reference.

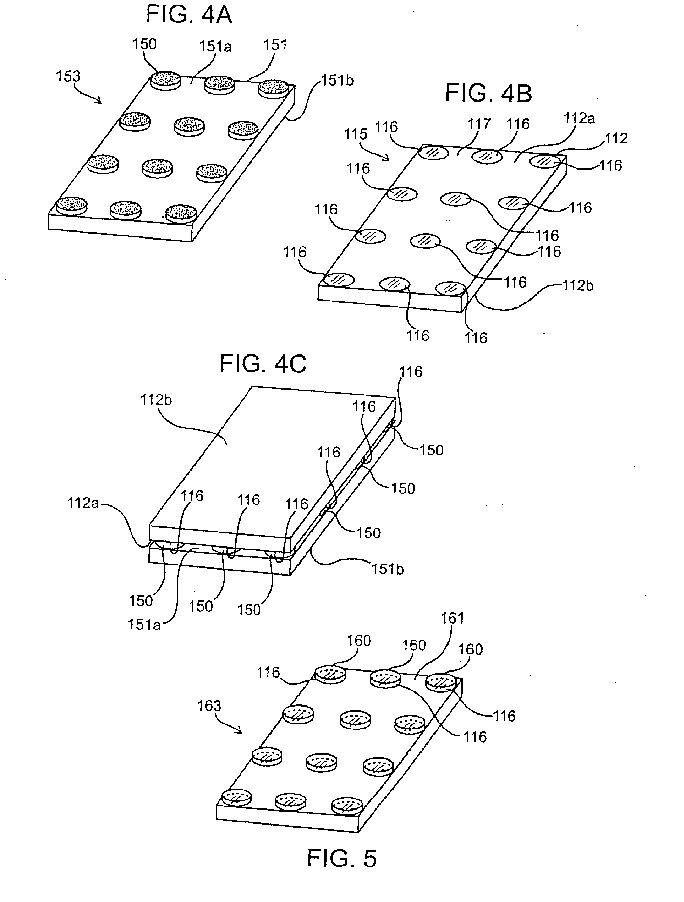

The substrates of the subject MALDI sample holders may assume a variety of shapes and sizes, where they are typically configured to be used in a MALDI protocol, e.g., capable of being operatively associated, e.g., inserted or otherwise coupled to a MALDI device so that MALDI can be performed on the sample(s) being supported thereby. In certain embodiments described in greater detail below, the subject MALDI sample holders are dimensioned to be operatively associated or joined with another substrate having at least one array thereon to provide direct transfer of array bound analytes to the sample holder and more particularly to the fluid retaining structure(s) of the sample holder (see or example FIGS. 4A and 4B).

Typically, the particular shape of a subject substrate is dictated at least in part by the MALDI device with which it may be used such that the shape of the substrate is one which corresponds or "fits" with the MALDI device, e.g., is able to be accommodated in or on a MALDI device receiving area. In any event, the shapes of these substrates range from simple to complex. In many embodiments, the substrates may assume a square, rectangular, oblong, oval or circular shape, etc., as well as other geometric shapes and irregular or complex shapes.

Likewise, the size of the subject substrates may vary depending on a variety of factors, including, but not limited to, the number of fluid retaining structures present thereon, the particular MALDI device with which it may be used, in certain embodiments the particular array to which it is to be joined, etc. Generally, the subject substrates are sized to be easily transportable or moveable.

Substrate materials are chosen to provide sufficient physical support for one or more fluid retaining structures positioned on at least one surface of a substrate and are also chosen to endure the conditions of any treatment or handling or processing that may be encountered in the use of the substrate. For example, as will be described in greater detail below, the substrates may be employed in a variety of sample processing protocols, such as analyte-digesting protocols, array assays, e.g., hybridization assays, protein binding assay, etc., and may be used in a MALDI protocol. As such, the substrates of the subject invention are robust enough to withstand any sample processing protocol and any MALDI protocol to which it is subjected, e.g., the substrates are stable enough to withstand the rigors of sample processing protocols and MALDI protocols.

Specifically, the materials of the substrates are typically substantially chemically and physically stable under conditions employed for the sample processing and MALDI protocols at hand. For example, the substrates may be substantially inert, e.g., substantially chemically and/or physically inert, to the sample contacted thereto and any reagents employed, e.g., wash reagents, chemical cleavage or digestion reagents, etc., during the sample processing and MALDI protocols. Furthermore, the subject substrates may be thermally stable and/or substantially stable to withstand any sample processing conditions, e.g., temperatures necessary to perform analyte digestion and/or an array assay such as a hybridization assay and any ionization process of a MALDI protocol to which it may be subjected (e.g., substantially stable with respect to the laser energy employed, etc.). By "substantially inert" and "substantially stable" it is meant that the substrates do not adversely affect or interfere with the sample processing and/or MALDI procedure, e.g., with the matrix and/or analyte that is under investigation. For example, certain MALDI protocols involve the use of a vacuum which facilitates the mobility of the ions produced by MALDI. Accordingly, in such embodiments the substrate employed is one that is vacuum compatible. As will be described below, in many embodiments the substrate includes a metal or metal alloy. Accordingly, in such embodiments the metal or metal alloy employed is one that does not contribute metal ions to the ionization of the analyte during ion formation in a MALDI protocol. The substrate employed is one that is also compatible with any analyte-digesting reagent(s) employed.

In certain embodiments, the surface of the substrate that is contacted with the analyte, i.e., the fluid retaining structure surface, may include one or more sample component binding agents, which agents are typically present in a modification layer on the substrate surface. The sample component binding agents are agents that bind to one or more components of the applied/contacted sample, and therefore remove one or more components from the solution phase of the sample. A variety of different agents may be employed as sample component binding agents. Representative sample component binding agents include non-specific binding agents, which agents reduce the overall complexity of the contacted sample, and specific binding agents, which agents bind to specific components of the applied sample. The agents may be agents that make up a surface modification layer. The surface modification layer may be a hydrophilic layer, a hydrophobic layer, a layer that displays charge, etc. In certain embodiments, the surface modification layer is one that mimics the surface of an array which may be joined with the substrates (see FIG. 5), as will be described in greater detail below. The sample component binding agents present on the substrate surface may include ligands and receptors, e.g., peptides, nucleic acids, antibodies, antigens, etc.

As described above, the substrates employed in the subject methods include at least one fluid retaining structure present on at least one surface of the substrate. A feature of the subject invention is that the one or more fluid retaining structures present on a substrate surface includes a material that changes from a first fluid state to a second solid state in response to a stimulus. The fluid retaining structures are configured to withstand sample processing and MALDI protocols, e.g., substantially stable, substantially inert, etc., to the regents and/or conditions of the sample processing and MALDI protocols to which they may be subjected. In many embodiments, multiple, discrete fluid retaining structures may be present on a single substrate surface enabling multiple samples, which may be the same or different, to be applied to, and analyzed on, a single substrate.

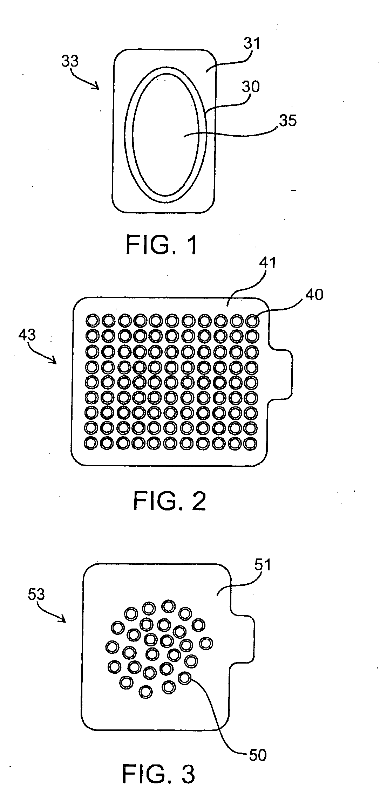

FIG. 1 shows an exemplary embodiment of the subject invention. As shown, a subject MALDI sample holder 33 includes fluid retaining structure 30 which is disposed around and marks the perimeter of an interior area 35 on a substrate 31. The interior area and the fluid retaining structure thus define a well that is adapted for retaining a fluid, where the well is defined by the walls of the fluid retaining structure and the substrate surface that is bounded or enclosed by the fluid retaining structure (i.e., the interior area). The shape of the interior area may be altered depending on the desired use, e.g., by altering the configuration of the fluid retaining structures and/or substrate surface, and the like.

The shape of a fluid retaining structure will depend on a variety of factors such as the analyte of interest, the particular MALDI device employed, etc. For example, in many embodiments the shape is selected such that mating of a fluid retaining structure with an array may be accomplished and/or shaped so that the fluid retaining structure is able to accommodate a laser beam directed into the interior thereof, i.e., directed at the sample retained by the fluid retaining structure. As such, the subject fluid retaining structures may assume a variety of different shapes such that the shapes of these structures range from simple to complex. In many embodiments, the fluid retaining structures will assume a square, rectangular, oblong, oval or circular shape, although other shapes are possible as well, such as other geometric shapes, as well as irregular or complex shapes. In certain embodiments, the width or diameter of a fluid retaining structure may not be constant throughout the entire thickness or height of the structure, i.e., the width may vary. Accordingly, shapes such as cone-like, spiral, helical, pyramidal, parabolic or frustum are possible as well. Also contemplated by the subject invention are fluid retaining structures made up of a plurality of fluid retaining structures stacked one on top of the other, where some or all of the stacked fluid retaining structures have the same dimensions or some or all may differ in one or more dimensions, e.g., height, width, etc. One or more fluid retaining structures may be in the form of one or more channels, e.g., to facilitate the direct deposition of a continuous stream of effluent, e.g., from a liquid chromatography column or the like, to the fluid retaining structure(s) of the substrate surface.

Typically, the number of fluid retaining structures present on a substrate ranges from about 1 to about 2000 or more, for example as many as about 2500, 3000, 3500, 4000, 4500, and 5000 or more fluid retaining structures may be present on a single substrate. As such, the configuration or pattern of fluid retaining structures may vary depending on the particular MALDI protocol being employed, the number of fluid retaining structures present, the size and shape of the fluid retaining structures present, in certain embodiments the size, shape and pattern of the arrays to which the fluid retaining structures are to be joined, etc. For example, the pattern of the fluid retaining structures may be in the form of a grid or other analogous geometric or linear pattern or the like, e.g., similar to a conventional microtiter plate grid pattern and in certain embodiments the fluid retaining structures are present in a non grid-like or non-geometric pattern.

FIG. 2 shows an exemplary embodiment of the subject MALDI sample holder 43 having a plurality of fluid retaining structures 40 on substrate 41. In this particular embodiment, the plurality of fluid retaining structures is in the form of an 11 x9 array or grid of well (99 wells). The multiple fluid retaining structures substrate may be fabricated in other configurations, for example, a 16x24 array or grid of wells (not shown), an 8x12 array of wells (not shown), a 32x48 array of wells (not shown), etc. In certain other embodiments, the fluid retaining structures are not in the form of a grid. For example, FIG. 3 shows an exemplary embodiment of a subject MALDI sample holder 53 having a plurality of fluid retaining structures 50 in a circular pattern on substrate 51. In yet other embodiments, the fluid retaining structures may be in a complex or non-linear pattern.

The physical dimensions of a subject fluid retaining structure may be characterized in terms of thickness, and/or width, and/or length (e.g., length may be used for structures having non-round shapes). Thickness or height is defined as the perpendicular distance from the substrate surface to most distal (i.e., top) surface of the fluid retaining structure. The width of a fluid retaining structure is defined as the distance from one side of a fluid retaining structure through the fluid retaining structure to the opposing side of the fluid retaining structure, proceeding on a line parallel to the fluid retaining structure surface, but perpendicular to the fluid retaining structure's long axis at the particular point where the length is being measured. The length is defined as the long axis of the fluid retaining structure that is parallel to the plane of the substrate surface. In structures having round shapes, the length may be analogous to a major axis. In those embodiments having more than one fluid retaining structure, it is to be understood that the dimensions (and/or the shapes and/or materials) of the fluid retaining structures may be the same or some or all of the fluid retaining structures may have different dimensions (and/or shapes and/or materials).

In general, the dimensions of a fluid retaining structure are such that any fluid retaining structure is able to accommodate a volume of fluid sufficient to perform the sample processing and MALDI protocols at hand. Typically, the fluid retaining structures or rather the wells formed thereby have a volume ranging from about 0.1 microliter to about 10 microliters or more, in certain embodiments from about 0.1 microliters to about 5 microliters and in certain embodiments ranges from about 0.1 microliters to about 2 microliters.

The thickness or height of a fluid retaining structure is of a dimension that is suitable to retain a sufficient amount of sample for any sample preparation or processing that may be performed on the sample, e.g., analyte-digesting, and/or to allow a laser to impinge at an appropriate angle on the sample retained by a fluid retaining structure without blocking or otherwise adversely limiting the area the laser can interrogate within the fluid retaining structure.

Accordingly, the thickness of a fluid retaining structure may be at least about 5 micrometers in certain embodiments, e.g., at least about 10 micrometers, e.g., at least about 15 micrometers and in certain embodiments at least about 20 micrometers or more, where the thickness may be about 25 micrometers or more in some embodiments, and may be up to about 50 micrometers or more in other embodiments, and up to about 100 micrometers or more, or even about 250 micrometers or more in still other embodiments. In larger scale devices, the thickness may be up to about 250 micrometers or more in certain embodiments, up to about 500 micrometers or more in some embodiments, up to about 1000 micrometers, and up to about 3000 micrometers in certain embodiments.

The width or diameter of a fluid retaining structure may be at least about 400 micrometers or more in certain embodiments, e.g., about 500 micrometers or more, e.g., about 700 micrometers or more, e.g., about 1000 micrometers or more. In larger scale devices, the width may range from about 1.0 to about 1.5 millimeters or more, e.g., in certain embodiments the width may range from about 1.5 millimeters to about 3 millimeters or more.

The length (or major axis in certain embodiments) of a fluid retaining structure may be at least about 400 micrometers or more in certain embodiments, e.g., about 500 micrometers or more, e.g., about 700 micrometers or more, e.g., about 1000 micrometers or more and in certain embodiments ranges from about 1000 micrometers to about 2000 micrometers or more, where in larger scale devices the length may range from about 1.5 millimeters to about 4.0 millimeters or more, e.g., may range from about 1.5 millimeters to about 3.5 millimeters.

The fluid retaining structure material(s) is selected to provide a fluid retaining structure having particular properties, e.g., suitable thickness, structure and fluid retaining properties, stability, inertness, sample preparation and MALDI protocol compatibility, etc. The subject fluid retaining structures may be flexible or deformable upon application of a suitable force thereto or may be rigid, i.e., not easily deformable or not deformable at all upon application of a suitable force thereto.

A feature of the subject fluid retaining structures is that the fluid retaining structures include a material that changes from a first fluid state to a second solid state in response to a stimulus. In other words, the subject fluid retaining structures are formed by employing a suitable curing protocol and as such the material of the fluid retaining structures may correctly be characterized as a curable material. In other words, in accordance with the subject invention, the material of the fluid retaining structures are transformed or otherwise altered or changed from a fluid state to a solid state in response to a stimulus, where the transformation, alteration or change from the fluid state to the solid state is irreversible.

The solid state or solid form of the fluid retaining structures is suitable for use in sample processing and MALDI protocol, e.g., the fluid retaining structures are insoluble to the fluid retained thereby, i.e., the solid fluid retaining structures are not soluble in or are not able to be solubilized by the fluid retained in the fluid retaining structures. As will be described in greater detail below, the subject fluid retaining structures may be changed from a fluid state to a solid state prior to or after being positioned at an intended location on a substrate surface.

Any material having suitable characteristics may be used as a fluid retaining structure material. Suitable fluid retaining structure material may derive from naturally occurring materials, naturally occurring materials that have been synthetically modified, or synthetic materials. Fluid retaining structures materials are generally fluid materials that may be cured to provide a solid fluid retaining structure having suitable characteristics. Selection of a fluid retaining structure material is determined relative to the intended application. Suitable fluid retaining structure materials include, polymers, elastomers, silicone sealants, urethanes, and polysulfides, latex, acrylic, etc. Of interest are silicone sealant materials such as Loctite 5964 thermal cure silicone. In certain embodiments, the fluid retaining structure material is a fluoropolymer such as polytetrafluoroethylene, e.g., a Teflon® such as a liquid Teflon®, e.g., Teflon® AF which are a family of amorphous fluoropolymers provided by E.I. du Pont de Nemours and Company.

In certain embodiments, at least a portion of a subject fluid retaining structure is hydrophobic, where the material of the subject fluid retaining structure may be inherently hydrophobic or be made hydrophobic, e.g., by a hydrophobic agent, chemical manipulation, etc. By "hydrophobic" it is meant that at least a portion of a surface of a subject fluid retaining structure is substantially if not completely unwettable and substantially if not completely liquid repellant for the sample retained therein, even if the sample is not an aqueous solution. For example, in the case of an oily-based sample, it should therefore correspondingly be a lipophobic surface. In certain embodiments, at least a portion of a subject fluid retaining structure is hydrophilic, where the material of the subject fluid retaining structure may be inherently hydrophilic or be made hydrophilic, e.g., by a hydrophilic agent, chemical manipulation, etc. By "hydrophilic" it is meant that at least a portion of a surface of a subject fluid retaining structure is easily wettable for the type of sample retained therein, even if the sample is not an aqueous solution. In certain embodiments, a fluid retaining structure may have one or more areas that are hydrophobic and one or more areas that are hydrophilic.

After the fluid retaining structure material is deposited in a fluid form in the predetermined configuration either at the desired site on a MALDI substrate surface or at another location (e.g., a non- MALDI substrate), the fluid retaining structure material is changed or transformed or rather is cured to form a fluid retaining structure that is solid by the application of a suitable stimulus thereto. Any suitable stimulus may be employed, where various stimuli are known in the art for changing a fluid material to a solid material. Accordingly, various methods of curing are available and may be utilized with the subject invention, the choice of which depends on a variety of factors such as the particular fluid retaining structure material(s) used, i.e., the particular properties of the material(s), the amount of time available for curing, etc.

For example, in certain embodiments, the fluid retaining structure material may be exposed to moisture to cause or to speed up the curing process. In such embodiments, moisture in the air reacts with the material to cure it. For example, moisture cure RTV silicone may be employed. Typical cure times for these RTV silicones range from about 1 day to about several days. In certain embodiments, the fluid retaining structure material may be exposed to heat to cause or to speed up the curing process. Heat cure fluid retaining structure material, such as heat cure silicone, are cured by a process of heating the material well above room temperature for a sufficient period of time, typically from about 10 minutes to about 2 hours. In certain embodiments, the fluid retaining structure material may be exposed to UV or visible light to cause or to speed up the curing process. Curing by UV cure is usually relatively fast, e.g., curing times from as little as about a few seconds, for example ranging from as little as 1 second to about 30 seconds or so. In certain embodiments, curing agents may be employed that cause or facilitate the curing process. These curing agents are typically catalysts to the curing process and may be used with one or more polymers, e.g., a polymer/catalyst combination may be employed. In certain embodiments, two or more curing protocols are employed.

A feature of the sample holders in certain embodiments is that the fluid retaining structure(s) include a quantity or amount of an analyte-digesting reagent. The analyte-digesting agent is one (or may be a combination of reagents) that digests or cleaves the analyte, i.e., cuts up the analyte into at least two fragments.

Accordingly, in such embodiments a variety of digesting reagents may be employed. It shall be understood that the digesting reagents described herein should not be considered to be limiting in any manner in that many other digesting reagents not referenced herein may be utilized to practice the subject invention, including digesting reagents yet to be discovered. In certain embodiments, the digesting reagent(s) includes an enzyme that digest or cleave an analyte, i.e., enzymatically digest an analyte, in particular or predictable positions.

In certain embodiments, the digesting reagent is a protein digesting reagent, i.e., a digesting reagent that cleaves or digests a protein, where protein digesting agents are known in the art and include proteases. In certain embodiments, the digesting reagent is an organic chemical composition, an inorganic chemical composition, a metal chelating complex, and the like. Accordingly, in certain embodiments the digesting regent may be a protease which cleaves or digests the peptide bonds of a protein according to the amino acids adjacent to the peptide bond under attack and in certain embodiments the digesting reagent may be a chemical composition such as cyanogen bromide and 3-bromo-3-methyl-2-(2-nitrophenylmercapto)-3H-indole skatole, which cleave proteins at methionine and tryptophan, respectively. In certain embodiments, the digesting reagent may be a metal chelate complex such as iron-EDTA and phenanthroline-copper which may provide a more comprehensive pattern of cleavage. Representative protein digesting reagents that may be used with the subject invention include, but are not limited to, trypsin, chymotrypsin, papain, clostripain, V8 protease, subtilisin, plasmin, cathepsin, rennin, thrombin, kallikrein, thermolysin, angiotensin converting enzyme, collagenase, stromelysin, bromelain, pepsin, elastase, cyanogen bromide and 3-bromo-3-methyl-2-(2-nitrophenylmercapto)-3H-indole skatole, cyanogen bromide, etc.

In certain embodiments, the digesting reagent is a nucleic acid digesting reagent, i.e., a digesting reagent that cleaves or digests a nucleic acid, e.g., a nuclease. Representative nucleases that may be used with the subject invention include, but are not limited to, DNase I, RNase I, RNase III, exonuclease I, exonuclease III, nuclease BAL 31, S 1 nuclease, Hinc II, mung bean nuclease, ribonuclease A, lambda exonuclease, exonuclease T, T1 nuclease, micrococcal nuclease, etc.

More than one and/or more than one type of digesting reagent may be used in a particular protocol, e.g., different protein digesting reagents may be employed and/or different nucleic acid digesting reagents may be employed and/or a combination of the same or different protein digesting reagent(s) and the same or different nucleic acid digesting reagents may be employed such that different fluid retaining structures have different digesting reagents.

In practicing the subject methods, once a suitable MALDI sample holder is provided, one or more analytes are deposited into one or more fluid retaining structures of the MALDI sample holders. A wide variety of analytes may be deposited such that, in general, any analyte suitable for analysis in a MALDI protocol may be deposited into a fluid retaining structure. Such analytes include, but are not limited to, naturally occurring and synthetic analytes such as any naturally occurring or synthetic polymeric molecule. The initial source of different analytes, e.g., proteins or nucleic acids, may be any convenient source, e.g., a synthetic source, a naturally occurring source, e.g., a cell lysate, tissue homogenate, blood, serum, tears, urine, etc. Analytes employed may range in size and are often at least about 500 Da or more, e.g., about 50,000 Da or more, e.g., about 1 million Da or more in mass. Analytes that may be employed in the subject invention include, but are not limited to, proteins, peptides, glycoproteins, oligonucleotides, polysaccharides, nucleic acids, lipids, fullerene compounds, glycolipids, organic compounds, various organelles, microorganisms such as bacteria and the like, etc.

The analyte sample is typically, though not always, present as a solution or rather one or more analytes present in a fluid, where the analyte may be present in a biological sample mixture such as a protein or nucleic acid mixture and/or buffer and/or may be dissolved in a suitable solvent. For example, in the analysis of peptides/proteins, 0.1% TFA may be employed as the solvent and in the analysis of oligonucleotides, pure 18 Megohms water may be employed.

The amount of analyte solution deposited into a fluid retaining structure will vary depending on the analyte, but will typically range from about 1 µL to about 50 µL, more usually from about 1 µL to about 10 µL and more usually from about 1 µL to about 5 µL, where the amount of analyte present may range from about 0.1 picogram (pg) to about 1microgram (µg), usually from about 1 pg to about 1µg more usually from about 10 pg to about 1000 pg. The analyte may be deposited into a fluid retaining structure in any convenient manner, e.g., the analyte may be manually deposited, e.g., pipetted, or automatically deposited using a fluid dispensing machine such as a robotic dispensing machine or the like, or transferred via an array as will be described in greater detail below.

Once retained by a fluid retaining structure, the analyte may then be prepared or processed so that it may be employed in a MALDI protocol. Advantageously, as noted above, the subject invention provides for the *in situ* processing or modifying of the analyte such that processing or modifying of the analyte may take place in the fluid retaining structure in which the analyte is retained. While a variety of sample processing or modifying steps may be performed in accordance with the subject invention, e.g., reducing, desalting, denaturing, etc., one of these includes digesting or chemically cleaving the analyte to produce a plurality of digested analyte fragments. Fragmenting or digesting the analyte of interest may facilitate the characterization of the analyte, e.g., MALDI analysis of these digested fragments can provide useful information about the analyte. For example, a protein analyte may be digested, e.g., with trypsin to produce a trypsin digest, where the resultant fragments are analyzed by tandem MALDI-TOF/ESI mass spectrometry to produce a searchable profile. Identification of the protein is then done by comparing the resultant profile to a database of reference profiles generated by a theoretical trypsin digest created against all available protein sequences in a given protein sequence database (for example, SWISS-PROT). Such a protocol is described in: Gygi, S.P et al. Nat. Biotech. (1999), Vol 17: 994-999, and Griffin, T.J. et al. Anal. Chem. (2001), Vol 73: 978-986.

A digesting reagent, as described above, may be deposited into a fluid retaining structure before, during or after the deposition of the analyte, where the amount of digesting reagent may range from about 1/10 to about 1/50 of the amount of analyte to be digested. In any event, a sufficient amount and concentration of digesting reagent is employed to digest the analyte of interest. FIG. 4A shows digesting reagent (represented as stippling) present in each fluid retaining structure.

In certain embodiments, a digesting reagent may be associated with a fluid retaining structure or well produced thereby, e.g., adsorbed, dehydrated, lyophilized, etc., so that it is bound to an area defined by a fluid retaining structure. As such, a digesting agent may be adsorbed, dried, lyophilized, dehydrated, etc., such that it is positioned in or about a fluid retaining structure including a substrate surface, whereby after contact with a fluid such as an analyte solution, buffer, water, etc., the digesting reagent is capable of reacting with the analyte to produce digested analyte fragments. For example, the digesting reagent may be re-constituted, re-hydrated or otherwise assume an activated form upon contact with a fluid such as a buffer, water, analyte solution, etc. Accordingly, the digesting reagent may be embedded, layered, or otherwise chemically or physically associated to or about a fluid retaining structure. In such embodiments, the digesting reagent may be stably associated with some or all of the substrate surface and/or some or all of a fluid retaining structure. As noted above, in those embodiments having more than one fluid retaining structure, some or all of the fluid retaining structures may include the same or different digesting reagents.

In certain instances, prior to being further processed or modified, e.g., prior to being digested for use in a MALDI protocol, analyte may first be removed or isolated from a sample, e.g., a biological sample such as blood, urine, serum, tears, cell lysate, tissue homogenate, etc. Accordingly, in many embodiments the sample deposited into a fluid retaining structure is a fractionated sample such that the sample includes a subset of the total proteins present in the original sample. For example, an array may be used to bind analyte present in a sample to its binding pair member or "probe" present on the array. The array may be a separate component such that one or more arrays may be present on a second substrate (see for example FIGS. 4A and 4B), i.e., a separate array substrate, or, as noted above, one or more arrays may be included on the MALDI sample holder substrate such that the substrate surface having at least one fluid retaining structure thereon mimics the surface of at least one array (see for example FIG. 5). In this regard, the substrate surface of a sample holder may include ligands and receptors, e.g., peptides, nucleic acids, antibodies, antigens, etc.

In the case where the array is a separate component from the MALDI sample holder, the subject invention advantageously enables the direct transfer of array bound analyte present on the array substrate surface to the fluid retaining structure(s) of a sample holder. In such instances, the MALDI sample holder substrate employed is dimensioned to fit or otherwise be operatively associated with an array to produce a chamber about the array having a reaction volume bounded on the top and bottom by the array surface and MALDI sample holder surface, respectively, and on the sides by the walls of a fluid retaining structure, where the reaction volume has a volume that often falls within the ranges provided above for the fluid retaining structure. More specifically, one or more fluid retaining structures of a MALDI sample holder are configured to provide one or more reaction chambers about one or more features of an array when operatively joined with an array, i.e., multiple fluid retaining structures may provide multiple reaction chambers about multiple array features simultaneously, such that one or more fluid retaining structure present on the sample holder substrate are configured to match or align with an array and more particularly the array features to provide separate chambers about the features.

In accordance with this particular embodiment, direct transfer of bound analyte to the sample holder may be accomplished as follows. A sample suspected of including an analyte of interest may be contacted with the array and an array assay may be performed such that the sample is contacted with the array under conditions sufficient for the analyte to bind to its respective binding pair member that is present on the array. Thus, if the analyte of interest is present in the sample, it binds to the array at the site of its complementary binding member and a complex is formed on the array surface. Depending on the nature of the analyte(s), the array may vary greatly. Representative arrays are now reviewed in greater detail.

The arrays employed in the subject methods are typically biopolymeric arrays. These biopolymeric arrays include a plurality of ligands or molecules or probes (i.e., binding agents or members of a binding pair) deposited onto the surface of a substrate in the form of an "array" or pattern. The subject arrays include at least two distinct polymers that differ by monomeric sequence attached to different and known locations on the substrate surface. Each distinct polymeric sequence of the array is typically present as a composition of multiple copies of the polymer on a substrate surface, e.g., as a spot or feature on the surface of the substrate. The number of distinct polymeric sequences, and hence spots or similar structures, present on the array may vary, where a typical array may contain from about one to about ten spots or may include more than about ten spots, more than about one hundred, more than about one thousand, more than about ten thousand or even more than about one hundred thousand features or more in an area of less than about 20 cm² or even less than about 10 cm². For example, features may have widths (that is, diameter, for a round spot) in the range from about 10 µm to about 1.0 cm. In other embodiments, each feature may have a width in the range from about 1.0 µm to about 1.0 mm, usually from about 5.0 µm to about 500 µm and more usually from about 10 µm to about 200 µm. Non-round features may have area ranges equivalent to that of circular features with the foregoing width (diameter) ranges. At least some, or all, of the features are of different compositions. Interfeature areas will typically (but not essentially) be present which do not carry any polynucleotide (or other biopolymer or chemical moiety of a type of which the features are composed). Such interfeature areas typically will be present where the arrays are formed by processes involving drop deposition of reagents, but may not be present when, for example, photolithographic array fabrication process are used. It will be appreciated though, that the interfeature areas, when present, could be of various sizes and configurations. The spots or features of distinct polymers present on the array surface are generally present as a pattern, where the pattern may be in the form of organized rows and columns of spots, e.g. a grid of spots, across the substrate surface, a series of curvilinear rows across the substrate surface, e.g. a series of concentric circles or semi-circles of spots, and the like.

In the broadest sense, the arrays employed in the subject methods are arrays of polymeric or biopolymeric ligands or molecules, i.e., binding agents, where the polymeric binding agents may be any of: peptides, proteins, nucleic acids, polysaccharides, synthetic mimetics of such biopolymeric binding agents, etc. In many embodiments of interest, the arrays are arrays of nucleic acids, including oligonucleotides, polynucleotides, cDNAs, mRNAs, synthetic mimetics thereof, and the like. In certain embodiments the arrays are arrays of nucleic acids, proteins, or peptides.

The arrays may be produced using any convenient protocol. Various methods for forming arrays from pre-formed probes, or methods for generating the array using synthesis techniques to produce the probes *in situ*, are generally known in the art. For example, probes can either be synthesized directly on the solid support or substrate to be used in the array assay or attached to the substrate after they are made. Arrays may be fabricated using drop deposition from pulse jets of either polynucleotide precursor units (such as monomers) in the case of *in situ* fabrication, or the previously obtained polynucleotide, proteins or peptides. Such methods are described in detail in, for example, the previously cited references including U.S. Patent Nos: 6,242,266, 6,232,072, 6,180,351, 6,171,797, and 6,323,043; and U.S. Patent Application Serial No. 09/302,898 filed April 30, 1999 by Caren et al., and the references cited therein, the disclosures of which are herein incorporated by reference. Other drop deposition methods may be used for fabrication. Also, instead of drop deposition methods, photolithographic array fabrication methods may be used. As mentioned above, interfeature areas need not be present, particularly when the arrays are made by photolithographic methods as described in those patents.

A variety of solid supports or substrates may be used, upon which an array may be positioned. In certain embodiments, a plurality of arrays may be stably associated with one substrate. For example, a plurality of arrays may be stably associated with one substrate, where the arrays are spatially separated from some or all of the other arrays associated with the substrate.

The substrate may be selected from a wide variety of materials including, but not limited to, natural polymeric materials as well as synthetic or modified naturally occurring polymers, e.g., poly (vinyl chloride), polyamides, polylysine, polyacrylamide, polyacrylate, polymethacrylate, polyesters, polyolefins, polyethylene, polytetrafluoro-ethylene, polypropylene, poly (4-methylbutene), polystyrene, poly(ethylene terephthalate), nylon, poly(vinyl butyrate), cross linked dextran, agarose, etc.; either used by themselves or in conjunction with other materials; fused silica (e.g., glass), bioglass, silicon chips, ceramics, metals, and the like. For example, substrates may include polystyrene, to which short oligophosphodiesters, e.g., oligonucleotides ranging from about 5 to about 50 nucleotides in length, may readily be covalently attached (Letsinger et al. (1975) *Nucl*. *Acids Res*. 2:773-786), as well as polyacrylamide (Gait et al. (1982) *Nucl*. *Acids Res*. 10:6243-6254), silica (Caruthers et al. (1980) *Tetrahedron Letters* 21:719-722), and controlled-pore glass (Sproat et al. (1983) *Tetrahedron Letters* 24:5771-5774). Additionally, all or part of the substrate may be hydrophilic or capable of being rendered hydrophilic, or all or part of the substrate may be hydrophobic or capable of being rendered hydrophobic.

Suitable substrates may exist, for example, as sheets, tubing, spheres, containers, pads, slices, films, plates, slides, strips, disks, etc. The substrate is usually flat, but may take on alternative surface configurations. The substrate can be a flat glass substrate, such as a conventional microscope glass slide, a cover slip and the like. Common substrates used for the arrays of probes are surface-derivatized glass or silica, or polymer membrane surfaces, as described in Maskos, U. et al., *Nucleic Acids Res*, 1992, 20:1679-84 and Southern, E. M. et al., *Nucleic acids Res*, 1994, 22:1368-73. In certain embodiments, the substrate may be particles such as spherical or ellipsoidal particles or the like, e.g., beads such as magnetic beads (e.g., Dynabeads® available from Dynal Biotech).

Each array may cover an area of less than about 100 cm², or even less than about 50 cm², 10 cm² or 1 cm². In many embodiments, the substrate carrying the one or more arrays will be shaped generally as a rectangular solid (although other shapes are possible), having a length that may range from about 4 mm to about 1 m, usually more than about 4 mm to about 600 mm, more usually less than about 400 mm; a width that may range from about 4 mm to about 1 m, usually less than about 500 mm and more usually less than about 400 mm; and a thickness that may range about 0.01 mm to about 5.0 mm, usually from about 0.1 mm to about 2 mm and more usually from about 0.2 to about 1.5 mm.

Immobilization of the probe to a suitable substrate may be performed using conventional techniques. See, e.g., Letsinger et al. (1975) *Nucl*. *Acids Res*. 2:773-786; Pease, A.C. et al., *Proc*. *Nat*. *Acad*. *Sci*. *USA*, 1994, 91:5022-5026, and AOligonucleotide Synthesis, a Practical Approach, Gait, M.J. (ed.), Oxford, England: IRL Press (1984). The surface of a substrate may be functionalized, e.g., treated with an organosilane coupling agent to functionalize the surface, etc. See, e.g., Arkins, Silane Coupling Agent Chemistry, *Petrarch Systems Register and Review*, Eds. Anderson et al. (1987) and U.S. Patent Nos. 6,258,454, 6,444,268 and 6,319,674.

FIG. 4B shows array substrate 112 having a first array surface 112a and an opposing rear surface 112b such that surface 112a includes array 115 disposed thereon. It will be appreciated though, that more than one array (any of which are the same or different) may be present on surface 112a, with or without spacing between such arrays. That is, any given substrate may carry one, two, four or more arrays disposed on a front surface of the substrate and depending on the use of the array, any or all of the arrays may be the same or different from one another and each may contain multiple spots or features. The one or more arrays 115 usually cover only a portion of the surface 112a, with regions of the rear surface 112b not being covered by any array 115. Each array 115 can be designed for testing against any type of sample, whether a trial sample, reference sample, a combination of them, or a known mixture of biopolymers such as polynucleotides. Substrate 112 may be of any shape, as mentioned above.

As mentioned above, array 115 contains multiple spots or features 116 of biopolymers, e.g., in the form of polynucleotides. As mentioned above, all of the features 116 may be different, or some or all could be the same. The interfeature areas 117 could be of various sizes and configurations. Each feature carries a predetermined biopolymer such as a predetermined polynucleotide (which includes the possibility of mixtures of polynucleotides). It will be understood that there may be a linker molecule (not shown) of any known types between the rear surface 112b and the first nucleotide. Accordingly, the same sample may be contacted with one or more spots or features, e.g., to isolate a plurality of analytes.

Following contact of the array with the sample, the resultant sample contacted array structure is then maintained under conditions sufficient and for a sufficient period of time for any binding complexes between members of specific binding pairs to occur. Where desired, the sample may be agitated to ensure contact of the sample with the array. In the case of hybridization assays, the sample is typically contacted with the array under stringent hybridization conditions, whereby complexes are formed between target nucleic acids that are complementary to probe sequences attached to the array surface, i.e., duplex nucleic acids are formed on the surface of the substrate by the interaction of the probe nucleic acid and its complement target nucleic acid present in the sample. An example of stringent hybridization conditions is hybridization at 50°C or higher and 0.1×SSC (15 mM sodium chloride/1.5 mM sodium citrate). Another example of stringent hybridization conditions is overnight incubation at 42°C in a solution: 50% formamide, 5 × SSC (150 mM NaCl, 15 mM trisodium citrate), 50 mM sodium phosphate (pH 7.6), 5 × Denhardt's solution, 10% dextran sulfate, followed by washing the arrays in 0.1 × SSC at about 65°C. Hybridization involving nucleic acids generally takes from about 30 minutes to about 24 hours, but may vary as required. Stringent hybridization conditions are hybridization conditions that are at least as stringent as the above representative conditions, where conditions are considered to be at least as stringent if they are at least about 80% as stringent, typically at least about 90% as stringent as the above specific stringent conditions. Other stringent hybridization conditions, as well as less or lower stringent conditions, are known in the art and may also be employed as appropriate. Less stringent conditions may include those conditions where one or more of the above- described parameters and/or concentrations and/or reagents are altered or deleted from a protocol.

Once the incubation of the sample with the array is complete, the array is typically washed at least one time to remove any unbound and non-specifically bound sample from the substrate, generally at least two wash cycles are used. Washing agents used in array assays are known in the art and, of course, may vary depending on the particular binding pair used in the particular assay. For example, in those embodiments employing nucleic acid hybridization, washing agents of interest include, but are not limited to, salt solutions such as salt, sodium phosphate (SSP) and salt, sodium citrate (SSC) and the like as is known in the art, at different concentrations and may include some surfactant as well.

To digest any analyte that has bound to the array, whether it be protein, nucleic acid, etc., the array substrate may be positioned on top of a MALDI sample holder having digesting reagent present in the one or more fluid retaining structures thereof. At this point, the digesting reagent may be present in fluid form in one or more fluid retaining structures, where such may be accomplished as described above, e.g., adding fluid to each fluid retaining structure to rehydrate MALDI sample holder-bound digesting reagent therein, or adding digesting reagent to each fluid retaining structure (individually or simultaneously, e.g., "flooding" the substrate, etc.). A sufficient amount of digesting reagent is present in each fluid retaining structure such that the digesting reagent comes in contact with the bound analyte to digest it. Typically, with fluid retaining structures having dimensions as described above, and the amount of digesting reagent typically ranges from about 1/5 to about 1/50 of the amount of the analyte of interest, i.e., of the analyte to be digested.

FIG. 4A shows a MALDI sample holder 153 having a substrate 151 that includes a plurality of fluid retaining structures 150 on a surface 151a thereof. Each fluid retaining structure is shown with digesting reagent (shown as stippling) present within the fluid retaining structure. As shown, MALDI sample holder 153, and particularly the fluid retaining structures of the MALDI sample holder, are configured to match or align with array features 116 of array 115 present on substrate 112.

The array substrate is joined with a MALDI sample holder such that the digestion solution present in a fluid retaining structure comes in contact with the bound analyte of the binding pair present in the particular array feature associated with the fluid retaining structure, as shown in FIG. 4C. In this manner, as described above, chambers are formed about the array features by the fluid retaining structures and the array surface and sample holder surface. At this point the two substrates may be clamped, screwed or otherwise held together in a fixed "sandwich" position and incubated for a sufficient period of time and under conditions sufficient to promote the digestion of the analyte, such that the analyte that is present as a surface-bound binding complex with its respective binding pair member is recognized and cleaved by the digesting reagent. Once the incubation is complete, the array may then be removed from the MALDI sample holder. As such, any digested analyte remains contained within a fluid retaining structure and is effectively retained thereby. This direct transfer of the analyte to the MALDI sample holder minimizes sample loss relative to indirect procedures, e.g., pipetting, where analyte may be adsorbed by pipette tips, microcentrifuge tubes, microtiter plates, during the transfer of the analyte to the MALDI sample holder.

As mentioned above, in certain embodiments the one or more arrays may be present on the MALDI sample holder substrate such that features of the one or more arrays are bounded by respective fluid retaining structures. Such an embodiment is shown in FIG. 5 which shown MALDI sample holder 163 that includes substrate 161 having array features 116 present on a surface thereof. Each array feature is bounded by a respective fluid retaining structure 160. Accordingly, in a manner analogous to that described above, an array assay such as a hybridization assay, is performed directly on the MALDI sample holder and in particular within each of the fluid retaining structures of the MALDI sample holder. Following completion of the array assay, digestion of each bound analyte may be performed by adding a sufficient amount of digesting reagent to each fluid retaining structure to digest the bound analyte therein. Again, loss of analyte is minimized because numerous analyte transfer steps are eliminated.

As mentioned above, in certain embodiments the array substrates are particles, e.g., beads such as magnetic beads such that each bead includes a probe feature and typically a plurality of beads include the same probe feature.

Accordingly, in using such "probe beads", the probe beads may be deposited into one or more fluid retaining structures present on a MALDI surface. Usually, at least a plurality of the same probe beads are deposited into any given fluid retaining structure. In certain embodiments, replicates of the same probes may be deposited into a plurality of different fluid retaining structures or different probes may be deposited into different fluid retaining structures present on the same MALDI sample holder. Accordingly, a sample suspected of containing an analyte of interest may then be contacted with the beads in a fluid retaining structure and an array assay is then be performed, e.g., a hybridization assay and the like, in a manner analogous to that described above. As such, an array assay is performed directly in a fluid retaining structure to provide analyte bound to the probes present on the beads in a fluid retaining structure. Following the array assay (and any washing protocols), the analyte bound to the beads may be digested, as described above, directly in the fluid retaining structure to provide analyte fragments that are contained within the fluid retaining structure.

Following digestion of the analyte, the analyte fragments may be employed in an ionization protocol. Accordingly, the beads may be removed from the fluid retaining structure, leaving behind the analyte fragments within the fluid retaining structure. For example, in those embodiments employing magnetic beads, the beads may be easily removed from the fluid retaining structure by a magnet, thereby leaving the analyte fragments remaining in the fluid retaining structure. As is apparent, such an embodiment minimizes sample handling as all of the analyte processing steps, e.g., analyte isolation, digestion and ionization, may be performed directly in the same fluid retaining structure.

The above-described embodiments enable easy archiving of an analyte sample on a MALDI sample holder, e.g., for use at a later time such as in a later-performed ionization protocol. For example, replicates of the same probes may be deposited into a plurality of different fluid retaining structures on a MALDI sample holder. Array assays may then be performed by contacting a sample with all of the probes in all of the fluid retaining structures, thereby providing replicates of bound analyte in each fluid retaining structure.

Following the completion of the array assays, some of the bound analyte present in only some of the fluid retaining structures, e.g., a first set, may be digested, e.g., with trypsin, the beads removed and the analyte fragments may be ionized, leaving bound analyte retained within the other fluid retaining structures that has not yet been digested. In this manner, one or more other sets having the same bound analyte as the first set have not yet been digested and may be employed for other uses.

Once the first set has been ionized, another digestion may be performed on some or all of the remaining bound analyte. For example, a second digestion, e.g., with chymotrypsin, and subsequent ionization may be performed on a second set. Still further, a third digestion, e.g., with papain, and subsequent ionization may be performed on this third set. Regardless of the number of different digestions performed, the ionization profiles of each set, i.e., of each digesting reagent, may be used to characterize the specific analyte.

In certain other embodiments, the analyte is detected and isolated using other techniques known in the art, e.g., electrophoresis, liquid chromatography, etc. In such instances, the analyte is then transferred by way of manual or automatic deposition, e.g., pipetting, into a fluid retaining structure for further sample processing such as analyte digestion. In yet other embodiments, the analyte is not isolated from the sample in which it is contained and thus, a volume of sample containing the analyte is deposited in a fluid retaining structure and the analyte is then digested. Regardless of the method used to position or place analyte in one or more fluid retaining structures, common to all is the digestion of the analyte by a digesting reagent in a fluid retaining structure.

The specific digesting protocol employed in the subject methods will vary based on a variety of factors such as the analyte, the digesting reagent, etc. As described above, typically the analyte is incubated with the digesting reagent for a period of time and under conditions sufficient to promote digestion of the analyte to produce digested fragments of the analyte. One exemplary such protocol for digesting a protein uses the proteolytic enzyme trypsin which hydrolyzes peptide bonds on the carboxyl side of the amino acids arganine and lysine to produce a trypsin digest. An example of a trypsin digesting protocol includes contacting the analyte with 1 to 5 µL of 3-50 ng/uL trypsin stock solution (trypsin solubilized in 50 mM phosphate buffer and incubating the analyte/trypsin mixture for about 16 hours at 37 °C. Following incubation, the mixture is cooled (at room temperature or briefly at 20 °C) and 1-5 uL of high 0.1 % trifluoroacetic acid ("TFA") solution in water is added to each fluid retaining structure to stop the digesting reaction.

Regardless of the particular digesting reagent and protocol employed, once the analyte is digested, the resultant digested analyte fragments may be further processed, e.g., any nonvolatile compound may be depleted or removed, etc., and/or may be employed in a MALDI protocol. A feature of the subject invention is that a MALDI protocol may be performed directly in the fluid retaining structure in which the digested analyte is retained, i.e., the analyte fragments do not need to be transferred from the MALDI sample holder to another container.

MALDI protocols employed with the subject methods may vary in detail depending on the analyte to be analyzed, the particular MALDI protocol employed, etc., where MALDI protocols include, but are not limited to, AP-MALDI and vacuum MALDI protocol. However, common to all MALDI protocols is the preparation of a mixture that includes the analyte fragments of interest and a matrix. In other words, once an analyte of interest is fragmented, it is mixed with a matrix. Typically, the analyte fragment solution is allowed to dry in the respective fluid retaining structure prior to being contacted with a suitable matrix.

A matrix is typically a small organic, volatile compound with certain properties that facilitate the performance of MALDI, e.g., the light absorption spectrum of the matrix crystals must overlap the frequency of the laser pulse being used, the intrinsic reactivity of the matrix material with the analyte must be suitable, the matrix material must demonstrate adequate photostability in the presence of the laser pulse, the volatility and affinity for the analyte must be suitable, etc. Accordingly, a matrix is selected based on a variety of factors such as the analyte of interest (type, size, etc.), etc. Examples of matrices include, but are not limited to, sinapinic acid (SA); alpha-cyano-4-hydroxycinnamic acid (HCCA); 2,5-dihydroxybenzoic acid (DHB); 3-hydroxypicolinic acid (HPA); 2',4',6'-trihydroxyacetophenone; and dithranol. The matrix is typically dissolved in a suitable solvent that is selected at least in part so that it is miscible with the analyte solvent. For example, in the analysis of peptides/proteins HCCA and SA work best with ACN/0.1%TFA as solvent and in the analysis of oligonucleotides HPA and ACN/H₂O may be employed.

Accordingly, after the appropriate matrix is selected, the analyte fragments are thoroughly mixed or suspended in the matrix at a suitable ratio to provide a sample that includes the analyte fragment/matrix mixture. In many embodiments, saturated solutions of the matrix are thoroughly mixed with very dilute solutions (e.g., nmole/µL to fmole/µL) of the analyte in a suitable ratio. In certain embodiments, for example when the analyte is a protein, higher concentrations may be required (e.g., 0.1 mmole to about 1 mmol). The exact ratio of the matrix to sample will vary, but typically ranges from about 1:1 to about 20:1 or more, where in many embodiments ranges from about 1:1 to about 10:1. In certain embodiments, co-matrices or matrix additives may be added to the mixture to enhance the quality of the MALDI procedure, e.g., by increasing ion yields; decreasing and/or increasing fragmentation; increasing the homogeneity of the matrix/analyte; decreasing cationization; increasing sample-to-sample reproducibility; etc. The amount of analyte fragment/matrix mixture present in each fluid retaining structure may vary depending on the type of particular analyte, the particular MALDI protocol employed, etc. Typically, about 0.1 µL to about 10 µL or more of the analyte fragment/matrix mixture is present in each fluid retaining structure, in certain embodiments from about 0.1 µL to about 5 µL and in certain embodiments from about 0.1 µL to about 2 µL of the analyte fragment/matrix mixture is present in each fluid retaining structure. In certain embodiments, calibration standards may be added to one or more fluid retaining structures, e.g., to dynamically calibrate a MALDI device such as a mass spectrometer, and/or controls such as positive and/or negative controls may also be employed.

Next, the analyte fragment/matrix mixture may be dried resulting in a solid deposit of analyte-doped matrix crystals in the fluid retaining structure or the mixture may be maintained in fluid form such that desorption from aqueous solutions may be employed (see for example Laiko et al. describing such using an IR laser in J. of the American Society for Mass Spectrometry, published online February 14, 2002). In a drying protocol, the matrix molecules dry out of solution with analyte fragment molecules in the resulting matrix crystals. Drying may be accomplished using any convenient method such as air drying (i.e., room temperature drying), vacuum drying, etc.

Whether the analyte fragment/matrix mixture is dried or not, at this point MALDI may be performed on the one or more analyte fragment/matrix mixtures (or calibration standards) present in the fluid retaining structures. In accordance with the subject invention, the MALDI sample holder having one or more analyte fragment/matrix mixtures retained in one or more fluid retaining structures may be operatively associated, i.e., directly coupled to a MALDI device so that MALDI may be performed on the one or more retained samples. In certain embodiments, the analyte fragment/matrix mixtures may be transferred to another or second substrate such as another subject MALDI sample holder MALDI so that may be performed on the one or more analyte fragment/matrix mixtures.

In general, in the performance of MALDI, laser energy is directed to the one or more analyte fragment/matrix mixtures retained in one or more fluid retaining structures. Nitrogen lasers operating at 337 nm are the most common illumination sources, as such lasers are usually well absorbed by many matrices. However, other lasers may also be employed, e.g., other UV and IR lasers. Upon laser irradiation, the matrix and analyte molecules are desorbed and ionized. Either transmission or reflection geometry may be employed in accordance with the subject methods. In reflection geometry, typically a laser illuminates the sample or analyte on the front side of the substrate such that laser illumination takes place on the same side of the substrate as ion extraction, e.g., the front of an opaque substrate surface. In transmission geometry, laser illumination is accomplished through the back side of the substrate, i.e., illuminates a sample from behind (see for example Galicia et al., Analytical Chemistry, vol. 74, 1891-1895 (2002)). The use of transmission geometry enables the use of samples such as tissues and cells which cannot be used with reflection geometry.

Once desorbed and ionized, the ions may be analyzed. As described above, a variety of analysis devices and methods for analyzing MALDI provided ions are known in the art and may be employed in accordance with the subject invention. In certain embodiments, the subject methods include analyzing the ions provided by the above-described MALDI protocol using a mass spectrometer. In further describing the subject invention, time-of-flight mass spectrometer ("TOF-MS") and ion trap mass spectrometers are used for exemplary purposes only and are in no way intended to limit the scope of the subject invention.

Accordingly, in certain embodiments, a TOF-MS (or an ion trap mass spectrometer or the like) is operatively coupled to the MALDI source used to ionize the analyte. Once ionized, the ions are electrostatically accelerated and transferred to a flight-tube that is free of electrostatic fields. It is in the flight tube where the ions are separated from each other based on their mass-to-charge (*m*/*z*) ratios. A detector detects and records the time it takes for each ion to arrive at the detector (at the end of the flight tube) as well as the signal intensity of each ion, such that lighter ions exit the flight tube first, followed by the heavier ions in increasing order of mass-to-charge ratio (i.e., ions with a larger mass travel at a slower velocity and therefore arrive at the detector after smaller mass ions). In this manner, a mass spectrum may be provided that provides information about the ions such as concentration and structural information.

Any convenient MALDI protocol may be adapted and employed with the subject invention. Representative MALDI protocols, as well as apparatuses for use in performing MALDI protocols, that may be adapted for use with the subject invention include, but are not limited to, those described in International Publication Nos.: GB 2,312782 A; GB 2,332,273 A; GB 2,370114A; and EP 0964427 A2, as well as in U.S. Patent Publication No. 2002031773; and U.S. Patent Nos.: 5,498,545; 5,643,800; 5,777,324; 5,777,860; 5,828,063; 5,841,136; 6,111,251; 6,287,872; 6,414,306; and 6,423,966; previously incorporated herein by reference.

In certain embodiments, the subject methods include a step of transmitting data, e.g. mass spectrum data, from the above-described methods to a remote location. By "remote location" it is meant a location other than the location at which the subject MALDI sample holder is present and the MALDI occurs. For example, a remote location could be another location (e.g. office, lab, etc.) in the same city, another location in a different city, another location in a different state, another location in a different country, etc. As such, when one item is indicated as being "remote" from another, what is meant is that the two items are at least in different buildings, and may be at least one mile, ten miles, or at least one hundred miles apart. "Communicating" information means transmitting the data representing that information as electrical signals over a suitable communication channel (for example, a private or public network). "Forwarding" an item refers to any means of getting that item from one location to the next, whether by physically transporting that item or otherwise (where that is possible) and includes, at least in the case of data, physically transporting a medium carrying the data or communicating the data. The data may be transmitted to the remote location for further evaluation and/or use. Any convenient telecommunications means may be employed for transmitting the data, e.g., facsimile, modem, Internet, etc.

### SYSTEMS

Also provided are systems for use in practicing the subject methods. The systems typically include at least a subject MALDI sample holder as described above and at least one array capable of being operatively joined to the MALDI sample holder. In this manner, at least one fluid retaining structure is provided about the at least one array and more specifically about one or more features of the array. The system may further include a MALDI device. By "MALDI device" it is meant any apparatus capable of performing some or all of the steps of a MALDI protocol. Such MALDI devices thus include, but are not limited to, automated MALDI sample preparation devices, automated sample dispensing devices, mass spectrometers, etc., as well as partially and fully integrated or interfaced devices that perform a plurality of operations associated with a MALDI protocol such as sample preparation functions and/or sample dispensing functions and/or mass spectrometer functions, and the like.

Examples of MALDI devices suitable for use with the subject invention include, but are not limited to, those described elsewhere herein, as well as those described in 6,111,251; 6,287,872; 6,414,306; 6,423,966, the disclosures of which are herein incorporated by reference.

### KITS

Also provided are kits, where the subject kits at least include one or more subject MALDI sample holders and at least one digesting reagent, where the digesting reagent may be provided in any convenient form, e.g., fluid or solubilized, lyophilized, etc. The at least one digesting reagent may include an enzyme that digests or cleaves an analyte, i.e., enzymatically digest an analyte, in particular or predictable positions.

In certain embodiments, the digesting reagent is a protein digesting reagent, i.e., a digesting reagent that cleaves or digests a protein, where protein digesting agents are known in the art and include proteases, organic and inorganic chemical compositions and metal chelating complexes. For example, in certain embodiments the digesting reagent may be a protease which cleaves or digests the peptide bonds of a protein according to the amino acids adjacent to the peptide bond under attack and in certain embodiments the digesting reagent may be a chemical such as cyanogen bromide and 3-bromo-3-methyl-2-(2-nitrophenylmercapto)-3H-indole skatole, which cleave proteins at methionine and tryptophan, respectively. In certain embodiments, the digesting reagent may be a metal chelate complex such as iron-EDTA and phenanthroline-copper which may provide a more comprehensive pattern of cleavage. Representative protein digesting reagents that may be used with the subject invention include, but are not limited to, trypsin, chymotrypsin, papain, clostripain, V8 protease, subtilisin, plasmin, cathepsin, rennin, thrombin, kallikrein, thermolysin, angiotensin converting enzyme, collagenase, stromelysin, bromelain, pepsin, elastase, cyanogen bromide and 3-bromo-3-methyl-2-(2-nitrophenylmercapto)-3H-indole skatole, cyanogen bromide, etc.

In certain embodiments, the digesting reagent is a nucleic acid digesting reagent, i.e., a digesting reagent that cleaves or digests a nucleic acid, e.g., a nuclease. Representative nucleases that may be used with the subject invention include, but are not limited to, DNase I, RNase I, RNase III, exonuclease I, exonuclease III, nuclease BAL 31, S 1 nuclease, Hinc II, mung bean nuclease, ribonuclease A, lambda exonuclease, exonuclease T, T1 nuclease, micrococcal nuclease, etc.

More than one and/or more than one type of digesting reagent may be included in a kit, e.g., different proteases may be included and/or different nucleases may be included and/or a combination of the same or different protease(s) and the same or different nuclease(s) may be included.

The one or more MALDI sample holders may include one or a plurality of fluid retaining structures thereon. In certain embodiments, a plurality of MALDI sample holders may be provided, where some or all may be the same or some or all may be different in one or more respects, e.g., differ in the number, pattern, size, shape, material, volume, etc., of the fluid retaining structure(s) present, differ in the size, shape, material, etc., of the substrate, etc., such that a variety of different MALDI sample holders may be available, in a kit for a variety of different applications.

The subject kits may also include one or more other reagents for preparing or processing an analyte sample for MALDI. As such, the reagents may include one or more matrices, solvents, sample preparation reagents, buffers, desalting agents, enzymatic agents, denaturing agents, where calibration standards such as positive and negative controls may be provided as well. As such, the kits may include one or more containers such as vials or bottles, with each container containing a separate component for carrying out a sample processing or preparing step and/or for carrying out one or more steps of a MALDI protocol.

The kits may further include one or more additional components necessary for carrying out an array assay, e.g., a hybridization assay or protein binding assay, where such may include sample preparation reagents, buffers, labels, and the like. As such, the kits may include one or more containers such as vials or bottles, with each container containing a separate component for the array assay, and reagents for carrying out an array assay such as a nucleic acid hybridization assay, protein binding assay, or the like. The kits may also include a denaturation reagent for denaturing the analyte, buffers such as hybridization buffers, wash mediums, enzyme substrates, reagents for generating a labeled target sample such as a labeled target nucleic acid sample, negative and positive controls.

In many embodiments of the subject kits, the MALDI sample holder(s) and digesting reagent(s) are packaged in a kit containment element to make a single, easily handled unit, where the kit containment element, e.g., box or analogous structure, may or may not be an airtight container, e.g., to further preserve the MALDI sample holder(s) and reagents until use.

The subject kits also generally include instructions for how to prepare, e.g., digest, a sample for MALDI and/or how to use the MALDI sample holder with a MALDI protocol. The instructions are generally recorded on a suitable recording medium or substrate. For example, the instructions may be printed on a substrate, such as paper or plastic, etc. As such, the instructions may be present in the kits as a package insert, in the labeling of the container of the kit or components thereof (i.e., associated with the packaging or sub-packaging) etc. In other embodiments, the instructions are present as an electronic storage data file present on a suitable computer readable storage medium, e.g. CD-ROM, diskette, etc. In yet other embodiments, the actual instructions are not present in the kit, but means for obtaining the instructions from a remote source, e.g. via the internet, are provided. An example of this embodiment is a kit that includes a web address where the instructions can be viewed and/or from which the instructions can be downloaded. As with the instructions, this means for obtaining the instructions is recorded on a suitable substrate.

### EXPERIMENTAL

The following example is put forth so as to provide those of ordinary skill in the art with a complete disclosure and description of how to make and use the present invention, and are not intended to limit the scope of what the inventors regard as their invention. Efforts have been made to ensure accuracy with respect to numbers used (e.g. amounts, temperature, etc.) but some experimental errors and deviations should be accounted for. Unless indicated otherwise, parts are parts by weight, molecular weight is weight average molecular weight, temperature is in degrees Centigrade, and pressure is at or near atmospheric.

In general, an experiment was performed that compared a myoglobin (MYG_HORSE PO2188) tryptic digest prepared in accordance with the subject invention to (1) a control which was a commercially available standard tryptic digest of myoglobin (MYG_HORSE PO2188), and (2) myoglobin (MYG_HORSE PO2188) that was not subjected to a digest. Each was analyzed using AP MALDI ion trap mass spectroscopy such that the mass spectroscopy results were compared.

### A. Control - commercially available standard tryptic myoglobin digest

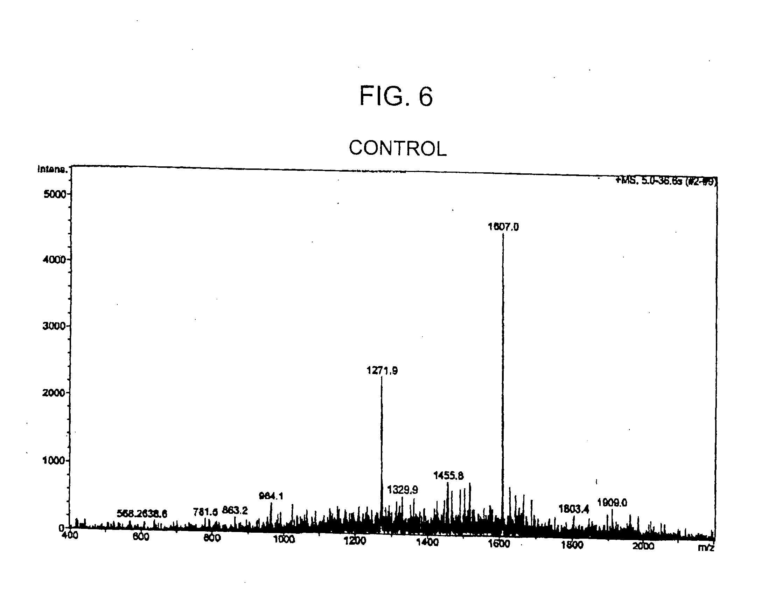

The control was commercially available standard tryptic digest of myoglobin (MYG_HORSE PO2188). Accordingly, a standard tryptic digest of myoglobin was obtained from Michrom BioResources, Inc. as a 500 pmol lyophilized sample. The sample was reconstituted with water to a concentration of 1 pmol/µL, and then was further diluted with HCCA matrix solution to a final concentration of 20 finol/uL. A 0.5 µL aliquot of this solution was spotted into a fluid retaining structure present on a MALDI plate to provide a 10 fmol spot. This was analyzed using AP-MALDI ion trap mass spectroscopy. FIG. 6 shows the mass spectrum of this control.

### B. On- plate tryptic digest of myoglobin according to the subject methods

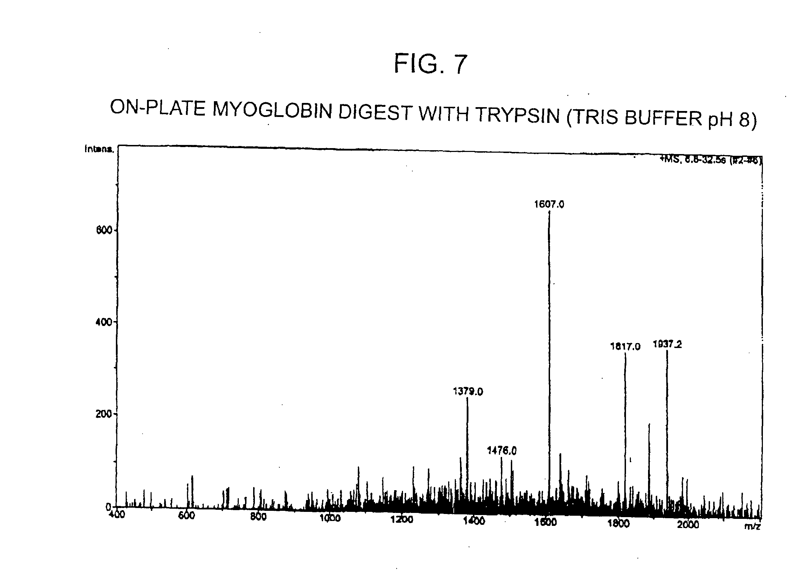

1 µL of myoglobin solution (0.1 mg/mL) (MYG_HORSE PO2188) was digested in 100 mM TRIS buffer (pH 8) directly in a fluid retaining structure present on a MALDI sample holder with 1 µL of trypsin (20 µg/mL) at 40°C for thirty minutes. The myoglobin was first denatured with 6M urea prior to digestion. After digestion, the reaction was stopped with 0.1 % TFA in water and then the digest was mixed with HCCA matrix solution. This was analyzed using AP-MALDI ion trap mass spectroscopy. FIG. 7 shows the mass spectrum of this myoglobin on-plate digestion.

### C. Undigested myoglobin

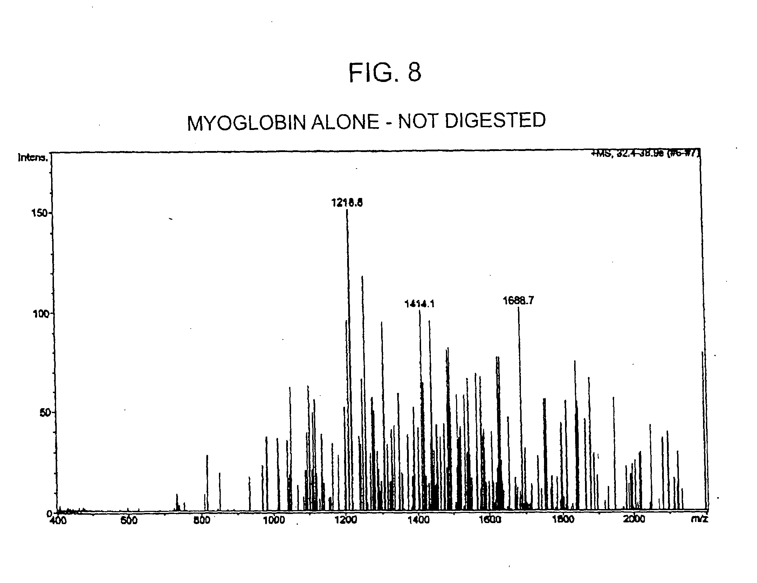

1 µL of myoglobin solution (0.1 mg/mL) (MYG_HORSE PO2188) was deposited into a fluid retaining structure present on a MALDI sample holder, but no digestion was performed. The myoglobin was processed as above (e.g., maintained at 40°C for thirty minutes, mixed with 1 µL 0.1% TFA in water and then mixed with HCCA matrix solution). This was analyzed using AP-MALDI ion trap mass spectroscopy. FIG. 8 shows the mass spectrum of this undigested myoglobin.

The results showed that the tryptic digestion of myoglobin directly within retaining structures of a MALDI plate is possible (four of the peptides in the myoglobin digest have been identified from the mass spectral data) and that the fluid retaining structures allow for containment of the digestion solution during the incubation at 40°C without loss of the enzymatic activity of the digestion enzyme. No peptides were observed in the myoglobin solution in the absence of the enzyme (the few peaks in the MALDI spectrum shown in FIG. 8 represent instrumental noise).

It is evident from the above results and discussion that the above-described invention provides useful methods and devices for use in MALDI protocols. Specifically, the subject invention enables the effective retention of a sample on a MALDI sample holder and provides for the direct processing, e.g., digestion, of the retained sample, thereby minimizing the time and labor involved in preparing a sample for a MALDI protocol. The subject invention may be employed to process a single sample, as well as multiple samples simultaneously without cross-contamination. As such, the subject invention represents a significant contribution to the art.

All publications and patents cited in this specification are herein incorporated by reference as if each individual publication or patent were specifically and individually indicated to be incorporated by reference. The citation of any publication is for its disclosure prior to the filing date and should not be construed as an admission that the present invention is not entitled to antedate such publication by virtue of prior invention.

While the present invention has been described with reference to the specific embodiments thereof, it should be understood by those skilled in the art that various changes may be made and equivalents may be substituted without departing from the true scope of the invention. In addition, many modifications may be made to adapt a particular situation, material, composition of matter, process, process step or steps, to the objective and scope of the present invention. All such modifications are intended to be within the scope of the claims appended hereto.

## Claims

1. A method of ionizing fragments of an analyte for subsequent analysis by mass spectroscopy, said method comprising:
(a) depositing an analyte into a fluid retaining (30) structure present on a substrate (31) surface to produce a retained analyte, wherein said fluid retaining structure comprises a material that changes from a first fluid state to a second solid state in response to an applied stimulus;
(b) digesting said retained analyte with a digesting reagent to produce fragments of said analyte; and
(c) ionizing said fragments of said analyte.

2. A method as claimed in Claim 1, wherein said analyte is bound to an array prior to said depositing.

3. A method as claimed in Claim 1 or Claim 2, wherein said depositing comprises contacting said array to said substrate in a manner such that said analyte is deposited into said fluid retaining structure.

4. A method as claimed in any preceding claim, wherein said digesting reagent comprises an enzyme.

5. A method as claimed in any preceding claim, wherein said substrate comprises more than one fluid retaining structure and said depositing comprises depositing analytes into more than one fluid retaining structure.

6. A method as claimed in any preceding claim, wherein said method further comprises drying said fragments on said substrate surface prior to said ionizing.

7. A method as claimed in any preceding claim, further comprising applying a matrix material prior to said ionizing.

8. A MALDI sample holder (33) comprising:
(a) a substrate (31) comprising at least one surface having at least one fluid retaining structure present on said at least one surface which comprises a material that changes from a first fluid state to a second solid state in response to an applied stimulus; and
(b) an analyte-digesting reagent present in said at least one fluid retaining structure.

9. A MALDI sample holder as claimed in Claim 8, wherein said at least one surface comprises a plurality of fluid retaining structures.

10. A system for use in ionizing fragments of an analyte for subsequent analysis by mass spectroscopy, said system comprising:
(a) a MALDI sample holder (33) as claimed in Claim 8 or 9; and
(b) at least one array dimensioned to be joined to said MALDI sample holder.

11. A kit for use in matrix-assisted laser desorption/ionization, said kit comprising:
(a) a MALDI sample holder (33) comprising:
(i) a substrate (31) having at least one surface; and
(ii) at least one fluid retaining structure present on said at least one surface which comprises a material that changes from a first fluid state to a second solid state in response to an applied stimulus; and
(b) at least one analyte-digesting reagent.

12. A kit as claimed in Claim 11, wherein said at least one analyte-digesting reagent is a protein digesting reagent or a nucleic acid digesting reagent.
